# EUROPEAN PATENT APPLICATION

(11) **EP 0 652 030 A1**
(43) Date of publication of application: **10.05.1995**
(21) Application number: 94202926.5
(22) Date of filing: 10.10.1994
(51) Int. Cl.: A62B 35/00, B60R 22/02

(54) **Seatbelt guide**

(30) Priority: 04.11.1993 NL 9301901
(71) Applicant: Netherlands Car B.V., NL-5708 HN Helmond (NL)
(72) Inventor: van Lieshout, Laurentius Antionius Josephus, NL-5731 JN Mierlo (NL)
(74) Representative: Timmers, Cornelis Herman Johannes

(57) **Abstract**

The invention provides a guide (10, 10a, 16', 62) for the diagonal part (8) of a seat-belt running over the back of a seat of a vehicle or vessel, having a guide element which encloses the belt and is fitted on the top edge of the seat back at a distance from the upstanding outer edge thereof, by means of which a better lie for the diagonal part of the belt is obtained when said belt is being worn by a child, in particular when said child is sitting on a raised child's seat.

## Description

The invention relates to a guide for the diagonal part of a seat-belt running over the back of the seat of a vehicle or vessel, comprising a guide element disposed near the top end of the belt and enclosing the belt.

Such a guide is known per se and is used, for example, for seat-belts in which the end lying near the outside of the vehicle ends, at the floor of the vehicle, in an automatic blocking mechanism; the guide element is then fitted on a vehicle body column and may or may not be adjustable in height.

Where diagonal belts are used by children, and in particular when the child is sitting on a raised child's seat, the problem with the conventional diagonal belts is that the centre of gravity of the upper part of the child's body lies above the contact zone where the diagonal belt part rests against the upper part of the body. This means that, when the vehicle reduces speed abruptly, the upper part of the child's body shoots out over the diagonal belt part and bents forwardly, so that the performance of the belt is very inadequate.

The object of the invention is to overcome this drawback. This object is achieved according to the invention through the feature that the guide element is fitted on the top edge of the seat back and at a distance from the outside edge thereof.

When the belt is being used by a child, and is then run through the guide element, the diagonal belt part will run higher over the upper part of the child's body, with the result that the contact zone is displaced upwards and will coincide with the centre of gravity of the upper part of the body. The abovementioned drawback is in this way overcome.

Preferred embodiments of the invention are described in the sub-claims.

The invention is explained with reference to the drawing. Herein shows:
Figure 1 a perspective front view of a child sitting on a raised child's seat, in which by a solid line the diagonal part of the corresponding seat-belt combined with the guide according to the invention is indicated, and the conventional situation is indicated by a dashed line;
Figure 2 partially in view, and partially in section, a first embodiment of the guide according to the invention;
Figure 3 partially in view and partially in section a second embodiment of the guide according to the invention;
Figure 4 partially in view and partially in section a third embodiment of the guide according to the invention.

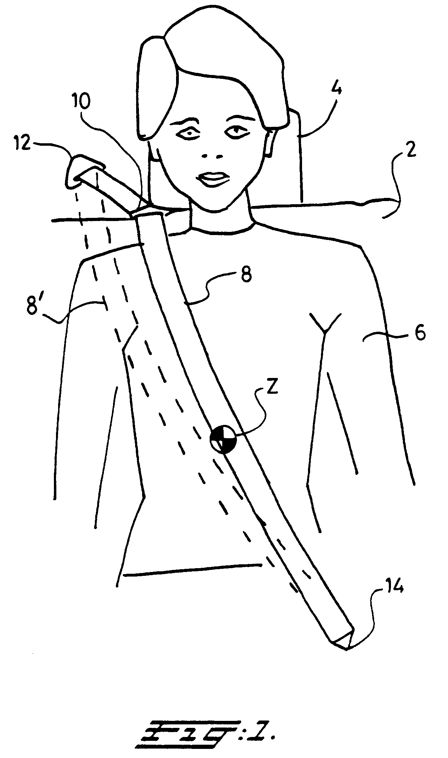

Figure 1 shows schematically a vehicle or vessel seat 2, provided with a headrest 4; on this seat sits the child 6 on a child's seat which is not shown. The figure shows how the diagonal part 8 of a seat-belt is guided through a guide 10 according to the invention, disposed near the headrest 4; the top end of the diagonal part 8 is either attached directly to a fixed part of the vehicle body at 12, or passes through a guide which is present there and is known per se. The other end 14 is fixed in the usual way near the seat.

The dashed lines 8' indicate the lie of the diagonal part 8 when the guide 10 is not used. It can be seen that in that case the centre of gravity Z of the upper part of the body of the child 6 lies above the diagonal part 8', so that there is a risk of the upper part of the child's body shooting out over the diagonal part 8' when the vehicle suddenly reduces speed. This is prevented by the guide 10 according to the invention: the centre of gravity Z lies in this case essentially below the contact zone of the diagonal belt part 8.

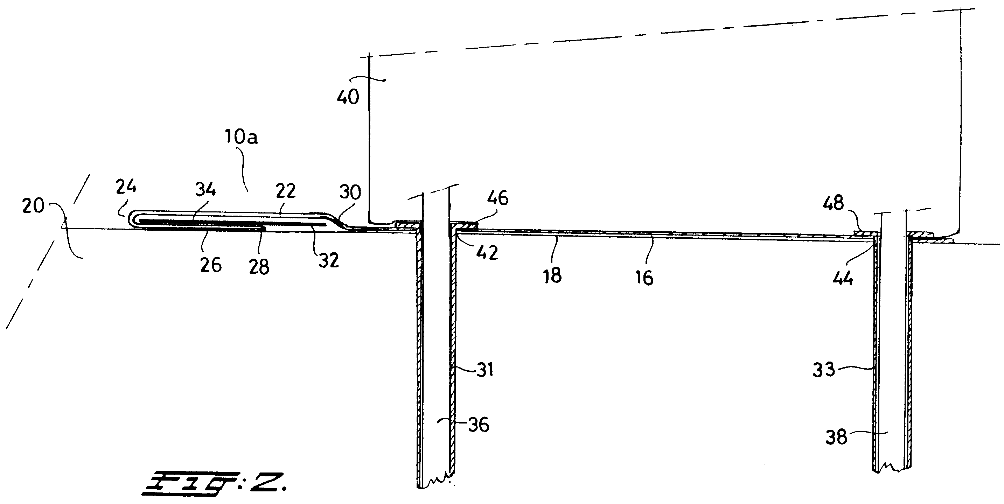

The guide 10 must, of course, be fixed relative to the seat back and lie as close as possible to the left edge of the headrest 4. This can be achieved in various ways, as indicated schematically in Figures 2 to 4.

Figure 2 shows an embodiment in which the guide, indicated in its entirety by 10a, consists of an elongated, strip-shaped part 16 which rests on the top edge 18 of the seatback 20 and merges by way of an upgoing part 30 into the top guide part 22, the left end 24 of which is bent-over to the right through 180° and continues in a guide part 26 lying partially below the top part 22 and resting on the top edge 18 of the seat 20. The figure shows how a space 32 is left free between the right end 28 of the strip 16 and the upgoing part 30 thereof, via this space the seat-belt 34 can be inserted into or removed from the guide.

The elongated strip 16 is preferably attached to the backrest 20 by using the guide bushes 32, 34 for the supporting rods 36, 38 of the headrest 40 which are in most cases present. The bushes 31, 33 pass in a close fit through openings 42, 44 in the strip 16, and the end flanges 46, 48 secure the strip in place.

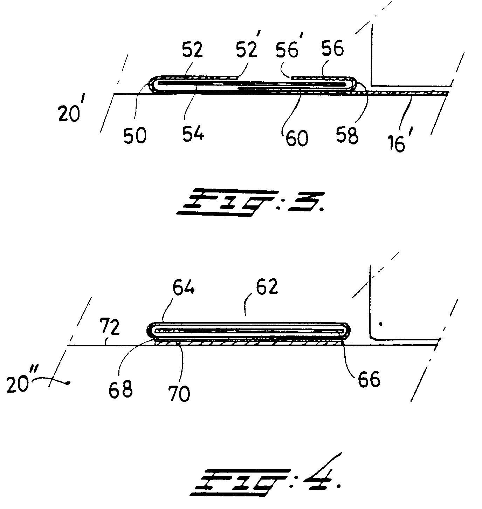

Figure 3 shows an embodiment in which the elongated strip 16', which is attached to the backrest at the left end, in the manner explained in Figure 2 and which is, as indicated by 50, bent-over to the right through 180° to form a first top part 52, which partially encloses the seat-belt 54. The enclosing of said belt is completed by a second top part 56, which at 58 is bent-over to the left and merges in a bottom part 60 which is fixed attached to the strip 16'. Between the end edges 52' and 56' of the top parts 52 and 56 respectively sufficient space is left for the insertion or removal of the seat-belt 54.

Finally Figure 4 shows a belt guide 62, which consists of a sleeve 64 closed in itself which surrounds the seat-belt 66. At the bottom side this sleeve 64 bears Velcro material 68, which cooperates with Velcro material 70, fixed on the top edge 72 of the backrest 20''.

Instead of an attachment by means of co-operating parts of Velcro material, it is also possible to use a press-stud fastening.

Of course, the attachment of the enclosed sleeve to the top edge of the back-rest will have to be sufficiently sturdy to withstand the forces which occur during a collision.

## Claims

1. Guide for the diagonal part (8) of a seat-belt running over the back of a seat of a vehicle or vessel, comprising a guide element (10, 10a; 16'; 62) disposed near the top end of the belt and enclosing the belt, **characterized in that** said guide element (10, 10a) is fitted on the top edge (18) of the seat back (20) and at a distance from the upstanding outer edge thereof.

2. Guide according to claim 1, **characterized in that** the element is formed as a flat bracket (22) made of rigid material which is, with the exception of an opening for insertion of the belt, closed in itself.

3. Guide according to claim 2, **characterized in that** the bracket (22) continues in an elongated attachment strip (16) which is fixed on the top edge of the seat back (20).

4. Guide according to claim 3, **characterized in that** at least one passage opening is formed in the attachment strip (16), for the passage of a headrest guide bush (31, 33).

5. Guide according to claims 3 - 4, **characterized in that** the attachment strip (16) merges, via a short raised edge (30) directed away from the bracket, in a covering part (22) which is adapted to the width of the belt (34) and is bent-over through 180° and ends at a distance from the upstanding edge, leaving a belt insertion opening (32).

6. Guide according to claim 1, **characterized in that** the guide part (62) is formed by a sleeve (64) closed in itself and provided with detachable fastening elements which surrounds the diagonal belt part.

7. Guide according to claim 6, **characterized in that** the fastening elements are made of Velcro material (68, 70).
